# EUROPEAN PATENT APPLICATION

(11) **EP 0 715 087 A1**
(43) Date of publication of application: **05.06.1996**
(21) Application number: 95850203.1
(22) Date of filing: 16.11.1995
(51) Int. Cl.: F16C 13/02

(54) **An arrangement in rolling bearing assemblies**

(30) Priority: 28.11.1994 SE 9404151
(71) Applicant: Aktiebolaget SKF, S-415 50 Göteborg (SE)
(72) Inventor: Göthberg, Sven, S-421 59 Va. Frölunda (SE); Wendeberg, Hans, S-426 71 Va. Frölunda (SE)
(74) Representative: Westman, P. Börje I.

(57) **Abstract**

A device at of rolling bearing assemblies, particularly with rolling bearings of large dimensions, and of the type incorporating an outer race ring (7), an inner race ring (9) and a plurality of rolling bodies provided between the rings, and where each ring in assembled position is arranged to be nonmovably interconnected to one assembly element (1, 6) each, intended to be supported by the rolling bearing relative to each other, one of said outer and inner race rings (7, 9) being equipped with means (10, 11) for fitting of itself (7, 9) with at least a portion of one of its side faces (9a) to a counter surface (2a) situated in a substantially radial plane and being securedly attached to the corresponding assembly element (1, 6) or a detail firmly connected thereto.

## Description

The present invention refers to an arrangement for rolling bearing assemblies, preferably for large size bearings and of the type defined in the preamble of claim 1.

In certain bearing applications of large size it is desired to support a tubular shaft having as large inner opening as possible, i.e. on a shaft having such a small material thickness as possible. Such desideratums appear e.g. at dewatering rolls in the paper and pulp making industry, where it is desired to suck of wayer by means of vacuum or drainage from a wire part into the roll and to lead away the water through a tubular shaft journal connected to the roll. In order to obtain the biggest possible suction capacity, it is in such a connection aimed at such a big internal tube diameter as possible, at the same time as it for space and weight reasons is desired to avoid increasing the external diameter of the tubular shaft more than what is absolutely necessary. Conventional applications therefore earlier have used a tubular shaft having such a thin wall as possible under consideration of the expected loads and stresses, on which shaft the inner race ring of the bearing has been mounted on a taper sleeve or by heating the inner race ring or driving it up the shaft by aid of pressure oil. Due to the large dimensions of the inner race ring such heating can hardly be effected in an oil bath, with electrical resistance heating or with other rational methods, but the heating must be carried through manually with gas torch or the like, i.e. in a rather non-rational manner. Driving up the bearing inner race ring on a tubular taper shaft or on a taper adapter sleeve also otherwise involves difficulties, not the least depending on the large dimensions and weight of the components. Another big problem is of course when such bearings have to be exchanged, whereby the dismounting often may lead to deformation of the tubular, thin-walled shaft journal. A further serious problem with such bearing assemblies is that the bearing ring mounted on the tubular shaft has a tendency to come loose after an un-acceptably short operation time, depending on the fact that the thin-walled, tubular shaft will be subjected to deformation depending on the stresses to which the bearing assembly is subjected under operation.

Other applications where bearing assemblies of this type occur are at mills, tubular stone crushers and the like, where e.g. for tubular stone crushers there is a desire to be able to feed stone lumps of as big dimensions as possible through the tubular shaft journal of the chrusher casing. In such applications the bearing assembly furthermore is generally subjected to bigger stresses, which further increase the risk for shaft deformation and early bearing failure.

Generally the bearing assembly might be advantageous for all types of rotary drums where the sole purpose for the drum shaft is to constitute a seat for the bearing.

The purpose of the invention is to provide a device in rolling bearings of the type initially referred to, by means of which the problems mentioned above are eliminated or at least reduced to a substantial extent, and this is achieved by the features defined in claim 1. Here it should be noted that it in some cases might be desirable alternatively to use the device according to the invention for mounting an outer race ring of a bearing, and the device might also provide advantages in some applications having solid shafts.

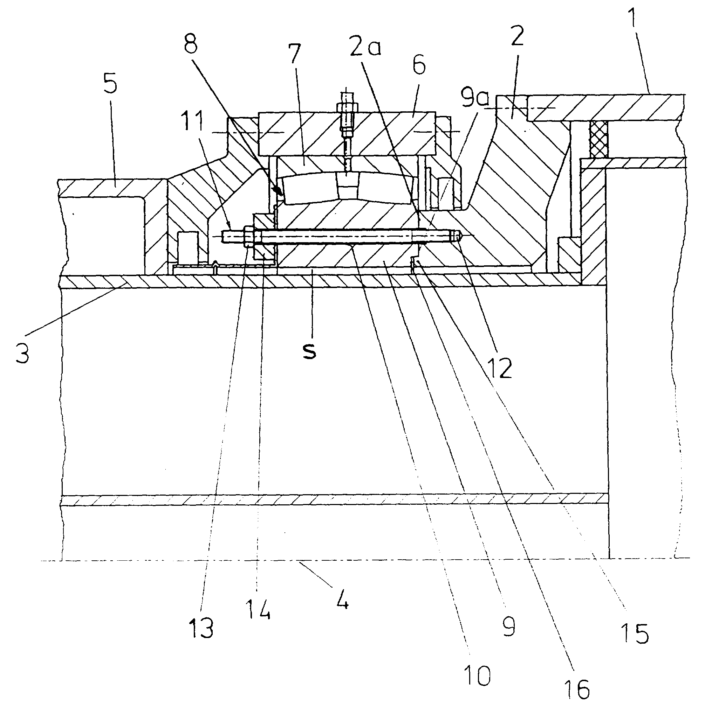

Hereinafter the invention will be further elucidated with reference to an embodiment illustrated in the accompanying drawing.

The figure shows in cross section a portion of a bearing assembly for a dewatering roll in accordance with the present invention.

The figure shows schematically a cross section through a portion of a dewatering roll 1, which is equipped with a gable 2 connecting to a non-rotary thin-walled, tubular shaft journal 3 supported by a supporting structure 3a. The roll 1 is rotatably supported about the centre axis 4 of the tubular shaft in a bearing housing 6 supported by a frame 5 which is just intimated, which bearing housing in the embodiment shown supports the outer race ring 7 of a double-row spherical roller bearing 8. The inner race ring 9 of the bearing according to the invention is not mounted in conventional manner on a taper sleeve or by the ring being driven up the shaft, but in this case the inner race ring 9 is equipped with a series of axial through bores 10 spaced apart along the circumference of the inner race ring, preferably at mutually equal spaces, and through each of which extends one bolt 11 having a threaded end, each of which bolts being tightenable in a correspondingly threaded bore 12, provided in the gable 2 of the roll in positions corresponding to the positions of the bores 10 in the bearing inner race ring 9. The distance between the inner cylindrical surface of the bearing inner race ring and the centre axis for each bore 10 in the inner race ring thereby is smaller than the distance between the bores 12 in the gable 2 and the outer envelope surface of the tubular shaft 3. Every bolt 11 is tightenable by means of a nut 13 against the side face of the bearing ring facing away from the gable 2, preferably via an intermediate thrust ring 14, thus that the bearing ring with its side face 9a facing the gable 2 will engage a corresponding counter surface 2a at the gable.

This means that the inner race ring 9 not will be in contact with the deformation sensitive tubular shaft 3, but will be mounted with a play s and "hangs" in the gable 2 of the roll. In this manner the tubular shaft journal 3 can be made extremely thin-walled without risking that the initially discussed problems will occur. Simultaneously the gable 2 can be made rather thick, thus that it is able to support the bearing inner race ring via the bolts 12 without problems, and without this interfering with the free internal space in the tubular shaft 3.

The annular gable 2 in the embodiment shown at its inner circumference is provided with an axially projecting annular flange 15. In a corresponding manner the inner bearing race ring 9 has an annular recess 16 formed at its inner circumference, which recess has a location and a shape being complementary to the annular flange 15. Due to interaction between the annular flange and the annular recess in the inner race ring the mounting of the bearing 8 in correct position in relation to the gable 2 and to the shaft 3 will be substantially facilitated, at the same time as a concentric guiding of the race track in relation to the envelope surface of the roll is achieved. As the envelope surface of the roll 1 and the envelope surface of the annular flange 15 are made tapering, it is furthermore achieved that bearings of very large dimensions can get an alignment, which is often necessary, to ascertain that the bearing ring will not become non-round.

Due to the solution with the bearing ring mounted in the gable wall, beside a maximum internal entrance diameter in the applications, it is further obtained the advantages of a considerably simpler mounting and dismounting of the bearing as the bearing during mounting must not be driven up and furthermore during fitting to a position wherein the bolts can be tightened, the bearing is guided by interacting recesses and projections in the cooperating portions.

The invention is not limited to mounting of the inner bearing race ring on a thin-walled shaft, but it also is possible to use a similar arrangement for an inner bearing race ring mounted on a solid shaft and also for applications with the outer race ring affixed by means of a gable mounting.

## Claims

1. A device at rolling bearing assemblies for supporting big radial loads about a comparatively thin-walled tubular shaft (3), particularly with self-aligning rolling bearings (8) of large dimensions, and of the type incorporating an outer race ring (7) and inner race ring (9) and a plurality of rolling bodies provided between the rings, and where each ring in assembled position is arranged to be nonmovably interconnected to one assembly element (1, 6) each, intended to be suppoted by the rolling bearing relative to each other,
**characterized therein**,
that said inner race rings (9) is equipped with means (10, 11) for fitting itself (9) with at least a portion of one of its side faces (9a) to a counter surface (2a) situated in a substantially radial plane and being securedly attached to the corresponding assembly element (1, 6) or a detail firmly connected thereto, but without radial contact with said tubular shaft (3).

2. A device as claimed in claim 1,
**characterized therein**,
that the means for fitting the bearing inner race ring (9) incorporates at least one substantially axial bore (10), for a fitting element (11) intended in assembled position to be fitted in a complementary member (12) in said counter surface (2a).

3. A device as claimed in claim 2,
**characterized therein**,
that said axial bore (10) and said complementary member (12) for receiving a fitting element (11) are arranged at such a radial distance from the envelope surface of the bearing ring facing away from the rolling bodies, that said ring (9) in mounted state has a radial play (s) against adjacent envelope surface (3) in the associated assembly element (11).

4. A device as claimed in claim 2,
**characterized therein**,
that the bearing inner race ring (9) provided with means for fitting the same with at least a portion of one of its side faces against the associated assembly element (1, 6) and this assembly element or a member (2) fixedly attached thereto in their surfaces facing each other being equipped with complementary fitting recesses (16) and projections (15), resp., adapted to give a guiding function during moving the bearing (8) to mounting position, and/or for supporting radial load acting upon the application.

5. A device as claimed in anyone of the preceeding claims,
**characterized therein**,
that one of the assembly elements is a roll (1) having a gable structure (2), whereby the member interacting with the fitting element (10) is provided in said gable structure (2).

6. A device as claimed in anyone of the preceeding claims,
**characterized therein**,
that the fitting element is constituted by a bolt (11) extending through an axial through-hole (10) in the bearing race ring concerned, and which bolt is screwed into a threaded blind bore (12) in its counter surface (2a).
